Europäisches Patentamt

European Patent Office

Office européen des brevets

(19)

(11) Publication number: **0 225 141 B1**

## EUROPEAN PATENT SPECIFICATION

(12)

(45) Date of publication of patent specification: 24.07.91   (51) Int. Cl.⁵: **G11B 13/04, G11B 11/10**

(21) Application number: **86309125.2**

(22) Date of filing: **21.11.86**

(54) Magneto-optical recording media.

(30) Priority: **28.11.85 JP 267779/85**

(43) Date of publication of application:
**10.06.87 Bulletin 87/24**

(45) Publication of the grant of the patent:
**24.07.91 Bulletin 91/30**

(84) Designated Contracting States:
**DE FR GB NL**

(56) References cited:
**EP-A- 0 051 296**
**FR-A- 2 550 647**

**IEEE TRANSACTIONS ON MAGNETICS, vol. MAG-21, no. 5, September 1985, pages 1624-1628, New York, US; Y. AOKI et al.: "A magneto-optic recording system using TbFeCo"**

**PATENT ABSTRACTS OF JAPAN, vol. 2, no. 75, 14th June 1978; & JP - A - 53 39705 (FUJITSU) 04-11-1978**

**Japanese Journal of Applied Physics, vol. 20, no. 11, 1981, pages 2089-2095**

(73) Proprietor: **SONY CORPORATION**
**7-35 Kitashinagawa 6-Chome Shinagawa-ku Tokyo 141(JP)**

(72) Inventor: **Horimai, Hideyoshi c/o Patents Division**
**Sony Corporation 6-7-35 Kitashinagawa 6-chome**
**Shinagawa-kuöTokyo 141(JP)**
Inventor: **Aoki, Yoshio c/o Patents Division**
**Sony Corporation 6-7-35 Kitashinagawa 6-chome**
**Shinagawa-kuöTokyo 141(JP)**
Inventor: **Watanabe, Kenjiro c/o Patents Division**
**Sony Corporation 6-7-35 Kitashinagawa 6-chome**
**Shinagawa-kuöTokyo 141(JP)**

(74) Representative: **Pilch, Adam John Michael et al**
**c/o D. Young & Co. 10 Staple Inn London WC1V 7RD(GB)**

## Description

This invention relates to magneto-optical recording media,and more particularly to magneto-optical recording media having perpendicular anisotropy magnetic layers formed of rare earth and transition metals.

A perpendicular anisotropy magnetic layer formed of rare earth and transition metals as applied to a previously-proposed magneto-optical recording medium is constituted by a single composition magnetic layer.

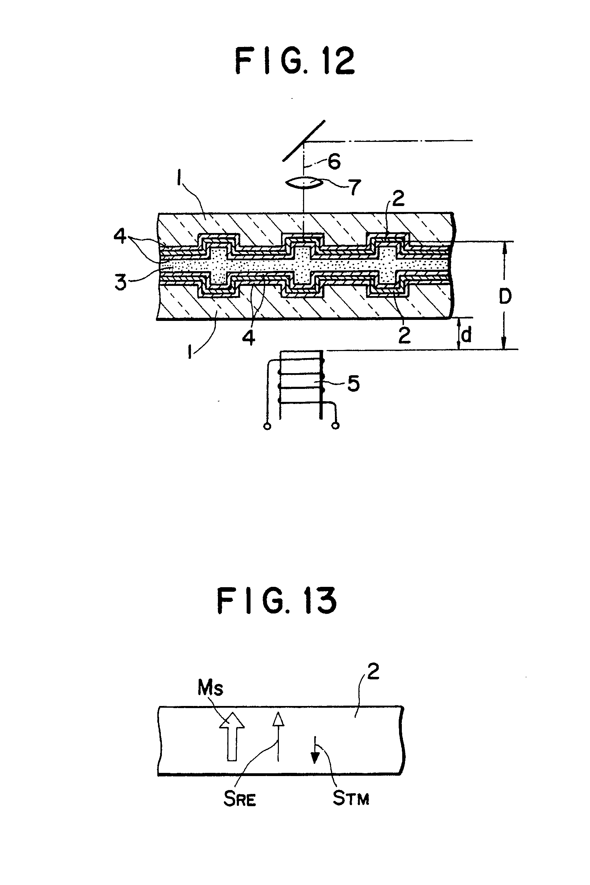

Figure 12 of the accompanying drawings shows a sectional view of an essential part of the previously-proposed magneto-optical recording medium, for example a magneto-optical disc. As shown in Figure 12, a pair of transparent substrates 1 each have recording track position detecting grooves on one side surface thereof. A perpendicular anisotropy magnetic layer 2 formed of rare earth metal and transition metal is formed by deposition on the one side surface of each substrate 1 where the grooves are formed. Both of the substrates 1 are bonded by an adhesive material 3 with the perpendicular anisotropy magnetic layers 2 opposed to each other. Protective layers 4 are formed by deposition between each substrate 1 and its magnetic layer 2, and between each magnetic layer 2 and the adhesive layer 3.

As shown in Figure 13 of the accompanying drawings, which is a schematic illustration of a magnetised condition, the perpendicular anisotropy magnetic layer 2 generates perpendicular magnetisation Ms by the sum of the rare earth metal spin $S_{RE}$ and the transition metal spin $S_{TM}$ in the layer thickness or vertical direction.

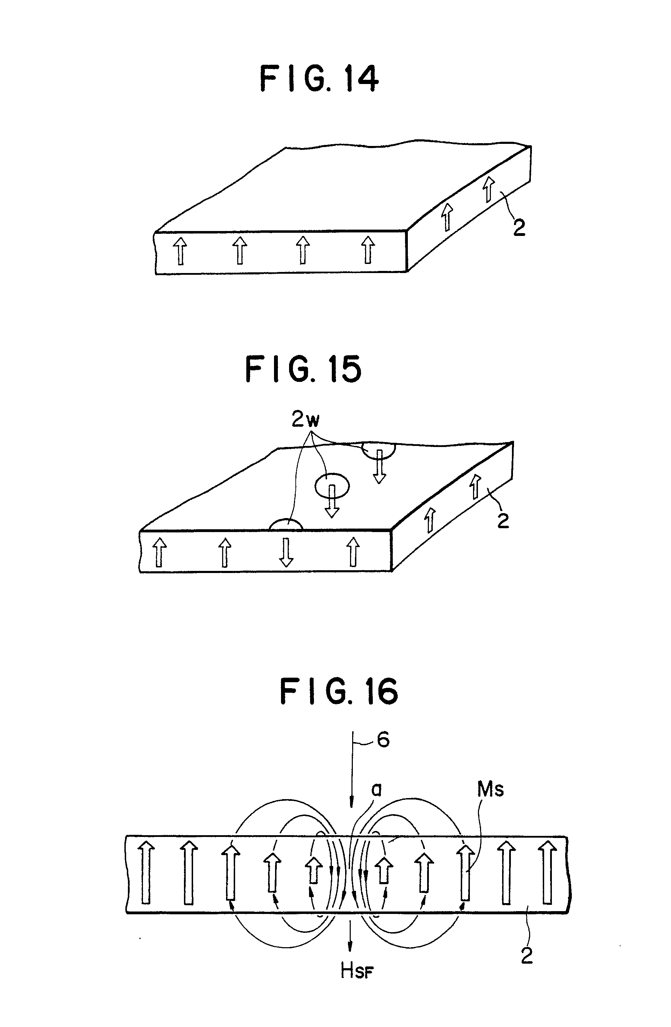

Recording on to the perpendicular anisotropy magnetic layer 2 is carried out by thermal magnetic recording such as Curie temperature recording or compensation temperature recording. In the case of Curie temperature recording, an external magnetic field is applied to a recording portion by magnetic field generating means 5, as shown in Figure 12. Under this condition, a laser beam 6 is directed through a condenser lens system 7 to the magnetic layer 2 to be recorded on the rear side of the substrate 1 in such a manner as to focus on the magnetic layer 2, thereby heating the focused portion to a temperature higher than the Curie temperature of the magnetic layer 2 and eliminating magnetisation of the heated portion. Thereafter, in the course of cooling the magnetic layer 2, magnetisation is generated in a direction which is identical with that of the external magnetic field by the external magnetic field, thus effecting the recording. In other words, under an erased condition or an unrecorded condition, the direction of magnetisation is uniform overall, as shown in Figure 14 of the accompanying drawings. In contrast, under a recorded condition, the direction of magnetisation at recording portions 2W is reversed to that at the other portions, as shown in Figure 15 of the accompanying drawings. In the case of compensation temperature recording, the temperature of the magnetic layer is increased near to a compensation temperature where a coercive force Hc diverges, thereby decreasing the coercive force. Thus, magnetisation at portions having a coercive force less than that of the external magnetic field is inverted. Accordingly, the magnetic layer is not heated up to the Curie temperature in the case of compensation temperature recording.

Recording on to the perpendicular anisotropy magnetic layer is desirably achieved by high-density recording. The aforementioned thermal magnetic recording such as Curie temperature recording or compensation temperature recording commonly has an advantage in that an external magnetic field required for recording or erasing information may be considerably less than that required in so-called magnetic recording using a magnetic tape or a magnetic disc.

However, in thermal magnetic recording, a stray field $H_{SF}$ is generated by magnetisation in the periphery of an area where the Curie temperature has been reached by irradiation by a laser beam, or an area where a coercive force Hc has been decreased in the case of compensation temperature recording, and a recording permissible (reversal of magnetisation) temperature (which will be hereinafter referred to as the recording temperature) has been reached. As a result, particularly during erasing, the stray field acts to cancel the external magnetic field required for erasing information. Therefore, a large external magnetic field is required for erasing. Figure 16 of the accompanying drawings shows a condition where a part a is heated to a Curie temperature or a recording temperature by irradiating a laser beam 6 on to the perpendicular anisotropy magnetic layer 2. While magnetisation at the part a is eliminated at the Curie temperature (for example), the stray field $H_{SF}$ is generated at the part a by magnetisation Ms in the periphery of the part a. Accordingly, when an external magnetic field is applied to the part a to record or erase information, an effective magnetic field is affected by the stray field $H_{SF}$. During recording, since a recording portion has magnetisation with a direction which is the reverse to that of the peripheral magnetisation, an external magnetic field $H_{exw}$ upon recording has the same direction as that of the stray field $H_{SF}$, but an external magnetic field $H_{exe}$ upon erasing has a direction which is the reverse to that of the stray field $H_{SF}$.Therefore, effective magnetic fields $H_{effw}$ and $H_{effe}$ upon recording and erasing, respectively, are represented by the following equations (1) and (2).

$$H_{effw} = H_{SF} + H_{exw} \quad \text{....... (1)}$$
$$H_{effe} = -H_{SF} + H_{exe} \quad \text{....... (2)}$$

As the effective magnetic field $H_{effe}$ upon erasing is diminished by the stray field $H_{SF}$, the external magnetic field $H_{exe}$ needs to be increased.

In an ideal case where a sufficient inverted magnetic domain may be obtained without the external magnetic field $H_{exw}$, the effective magnetic field $H_{effw}$ upon recording may be obtained by the stray field $H_{SF}$ only. However, even in such an ideal case, it is necessary to apply an external magnetic field $H_{exe}$ with a magnitude at least exceeding the stray field $H_{SF}$ upon erasing. Further, in order to effect sufficient inversion of magnetisation, an external magnetic field $H_{exe}$ of about double the magnitude of the stray field $H_{SF}$ is required. In the case of compensation temperature recording, it is necessary to add a coercive force Hc' of a magnetic layer, and as a result, a larger external magnetic field is required. In practise, the external magnetic field should have a magnitude of about several $10^4$ $Am^{-1}$ to about several $10^5$ $Am^{-1}$ (about several hundred oersted to about several thousand oersted) for saturating the inverted magnetic domain upon recording. Such magnitude of magnetic field is required for the external magnetic field $H_{exe}$ upon erasing.

Curie temperature recording is more advantageous than compensation temperature recording, and it is necessary to reduce the stray field $H_{SF}$ as little as possible, so as to reduce the external magnetic field $H_{exe}$ upon erasing. The stray field $H_{SF}$ may be reduced to some extent by making the composition of the magnetic layer 2 substantially similar to a compensation composition which may reduce the saturation magnetisation Ms of the magnetic layer 2. However, the coercive force Hc is increased thereby making magnetising difficult and also making inspection or testing of, for example, a magneto-optical disc, as prepared troublesome. This is caused by the fact that inspection of such a disc is generally carried out by measurement using a VSM (vibrating sample magnetometer) capable of generating a magnetic field of about $1.2 \times 10^6$ $Am^{-1}$ (15 kOe). Therefore, it is necessary to use a different type of special measuring device or the temperature has to be increased to reduce the coercive force Hc for measurement, which makes the operation complicated. Even when the magnetic layer 2 is prepared by reducing the saturation magnetisation Ms only without increasing the coercive force Hc, the recording condition of the layer is rendered unstable, and high-density recording cannot be carried out.

A magneto-optical head for magneto-optically recording, reproducing and erasing information on to and from a magneto-optical recording medium, that is, a magneto-optical head portion having laser beam irradiating means, an optical lens system and magnetic field generating means, has previously been proposed to be of a non-contact type, in which the head portion is retained and scanned at a desired distance from the magneto-optical recording medium. Therefore the magnetic field generating means will be separated from the magnetic layer of the recording medium by a significant distance. As shown in Figure 12, when a distance d between the magnetic field generating means 5 and the adjacent substrate 1 of the recording medium is set to 1 mm, for example, a distance D between the magnetic field generating means 5 and the magnetic layer 2 for recording, reproducing and erasing information (by irradiation by the laser beam 6) will be about 2.5 mm, in view of the thickness of the substrate 1 and the adhesive layer 3. Therefore, it is necessary to provide a sufficiently powerful magnetic field generating means 5, so as to apply a magnetic field of several $10^4$ $Am^{-1}$ to several $10^5$ $Am^{-1}$ (several hundred oersted to several thousand oersted) to the objective magnetic layer 2. However, designing such a powerful magnetic field generating means 5 is accompanied by technically serious problems. In the case that the magnetic field generating means 5 is constituted by an electromagnet, for example, a problem of significant power consumption or heat generation will arise. When using a permanent magnet for the magnetic field generating means 5, it is difficult to accelerate a switching cycle of recording, reproducing and erasing, that is, the inversion speed of the magnetic field. When recording in a weak applied magnetic field, the carrier/noise (C/N) ratio is low, and when erasing in a weak applied magnetic field, any previously-recorded information may not be fully erased. Therefore, when re-recording any information on the previously-recorded area, that is, over-writing any information, the information error will be increased.

It is considered effective to adopt a magnetic field modulating method, so as to attain successful over-writing in magneto-optical recording. In the magnetic field modulating method, a magnetic field to be applied is modulated according to the information to be recorded while a laser beam provides a constant level of irradiation. Writing of a signal is carried out according to the direction of the applied magnetic field while a magnetic domain which has reached the Curie temperature or a recording temperature by the irradiation by the laser beam is being cooled. By contrast, in a laser modulating method, an external applied magnetic field is fixed in the direction of desired magnetisation, and a magnetic domain is irradiated by a laser beam modulated according to the information to be recorded, and thereby inverted to carry out recording of information. However, in the laser modulating method, it is necessary initially to erase any previously-recorded information and then to write fresh information on the erased area for the purpose of re-recording of information. As a result, access time is increased and data transfer rate is reduced. Further, if recording and erasing are carried out by independent laser beams, pseudo over-writing may be attained, but apparatus and control operation are rendered complicated with increased costs. Naturally, this pseudo over-writing is not true over-writing. As described above, the magnetic field modulating method is preferable to attain over-writing. However, it is almost impossible to generate a strong magnetic field with a high frequency (in the order of MHz) for conducting the magnetic field modulating method.

In Japanese Patent Application Laid-Open Publication No. JP-A-60-55538, there is disclosed a magneto-optical recording medium including two magnetic layers, but effective over-writing of this magneto-optical recording medium is not possible. Further, in Japanese Patent Application Laid-Open Publication No. JP-A-60-17165, there is disclosed a compensation temperature recording arrangement including two perpendicular anisotropy magnetic layers which are exchange coupled to each other, but this arrangement also cannot provide effective over-writing.

As mentioned above, the presence of a large stray field during magneto-optical recording causes various problems and hinders the attainment of over-writing. If over-writing is not attainable, an erasing time substantially equal to a re-recording time will be required, particularly when re-recording continuous information such as music. Therefore, it would be desirable to achieve effective over-writing so as to remove an obstacle to the spread of magneto-optical recording.

According to the present invention there is provided a magneto-optical recording medium comprising:
a first ferrimagnetic layer formed of a rare earth metal and a transition metal, having magnetisation perpendicular to a surface of said first ferrimagnetic layer resulting from excess magnetisation of said rare earth metal compared to said transition metal; and
a second ferrimagnetic layer formed of a rare earth metal and a transition metal, having magnetisation perpendicular to a surface of said second ferrimagnetic layer resulting from excess magnetisation of said transition metal;
said first and second ferrimagnetic layers being superposed and coupled by exchange interaction, and said magnetisation of said first ferrimagnetic layer and said magnetisation of said second ferrimagnetic layer being arranged in opposite directions;
characterised in that:
said first and second ferrimagnetic layers do not have compensation temperatures between room temperature and the respective Curie temperature; and
said magnetisation of said first ferrimagnetic layer and said magnetisation of said second ferrimagnetic layer together provide substantially no residual stray magnetic field at a temperature between room temperature and a recording temperature at about the Curie temperature of at least one of said ferrimagnetic layers.

A preferred embodiment of the present invention, to be described in more detail hereinafter, provides a magneto-optical recording medium suitable for over-writing information under the application of a relatively low magnitude external magnetic field.

The invention will now be described by way of example with reference to the accompanying drawings, throughout which like parts are referred to by like references, and in which:

Figure 1 is an illustrative view of spontaneous magnetisation of a perpendicular anisotropy magnetic layer according to an embodiment of the present invention;

Figure 2 is an illustrative view of the orientation of the spins forming the magnetised state shown in Figure 1;

Figure 3 is a graph showing a magnetisation curve of the perpendicular anisotropy magnetic layer of the magneto-optical recording medium according to an embodiment of the present invention;

Figures 4 and 5 are graphs showing Kerr loops of the first and second magnetic layers employed for the magneto-optical recording medium according to the preferred embodiment of the present invention;

Figure 6 is an illustrative view of magnetisation of the perpendicular anisotropy magnetic layer in the recording state;

Figure 7 is an illustrative view of the orientation of the spins in the magnetic layer shown in Figure 6;

Figures 8 and 9 are sectional views of the magneto-optical recording medium according to the preferred embodiment of the present invention;

Figure 10 is a graph showing the relationship between erasing power and C/N;

Figure 11 is a graph showing the relationship between a modulated external magnetic field and a recording output level;

Figure 12 is a sectional view of a previously-proposed magneto-optical recording medium;

Figure 13 is an illustrative view of a magnetised state of the recording medium shown in Figure 12;

Figure 14 is an illustrative view showing the magnetised state upon erasing of the previously-proposed magneto-optical recording medium;

Figure 15 is an illustrative view showing the magnetised state upon recording of the previously-proposed magneto-optical recording medium; and

Figure 16 is an illustrative view showing a stray field in the previously-proposed magneto-optical recording medium.

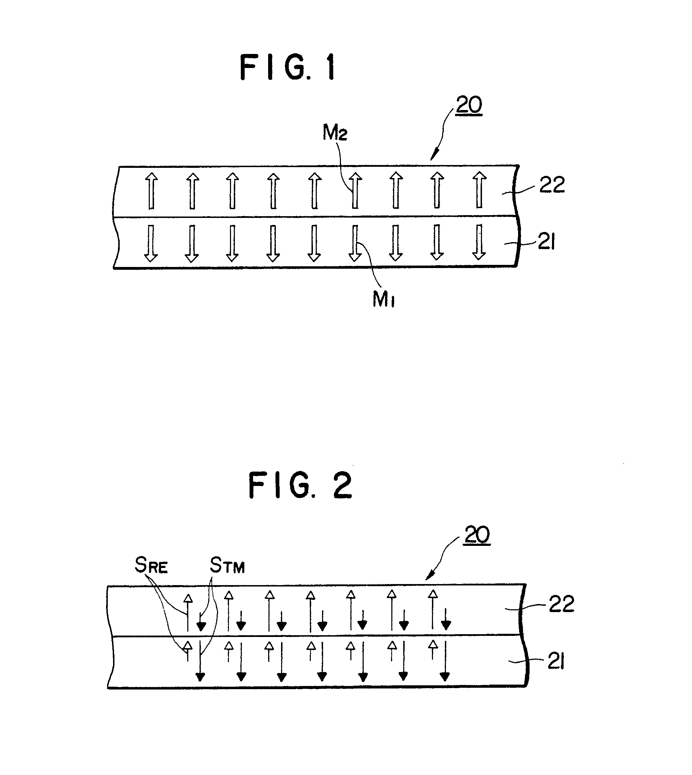

As shown in Figure 1, a magneto-optical recording medium according to an embodiment of the present invention includes a perpendicular anisotropy magnetic layer 20 formed by laminating at least first and second rare earth metal/transition metal magnetic layers 21 and 22 which are exchange coupled to each other and have spontaneous magnetisations $M_1$ and $M_2$ oriented in opposed relation to each other upon recording and erasing.

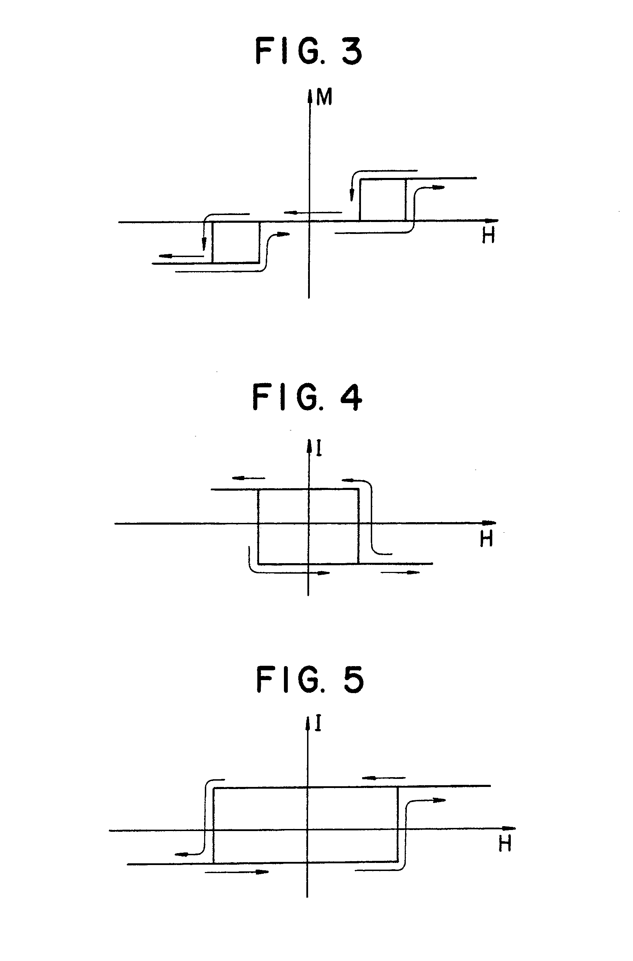

The first and second magnetic layers 21 and 22 are formed of an alloy containing one or more of the rare earth metal elements such as Tb, Gd, Dy, Eu, and one or more of the transition metal elements such as Fe, Co, Ni. The first magnetic layer 21 contains a larger amount of transition metal as exceeding a compensation composition, and the second magnetic layer 22 contains a larger amount of rare earth metal as exceeding the compensation composition. As shown in Figure 2, the spin $S_{TM}$ of the transition metal atoms acts predominantly in the first magnetic layer 21 to generate the magnetisation $M_1$ shown in Figure 1, and the spin $S_{RE}$ of the rare earth metal atoms acts predominantly in the second magnetic layer 22 to generate the magnetisation $M_2$ which is the reverse of the magnetisation $M_1$. At the compensation composition in a ferrimagnetic material having spins of rare earth metal atoms and transition metal atoms in opposite directions to each other, magnetisations caused by the spins are equal to each other at normal temperature, and appear to have been eliminated. As mentioned above, the magnetisations of the first magnetic layer 21 and the second magnetic layer 22 are oppositely oriented to be cancelled overall, as shown in Figure 1. The spins $S_{RE}$ in the layers 21 and 22 are each oriented in the same direction, and the spins $S_{TM}$ in the layers 21 and 22 are also each oriented in the same direction, which is opposite to that of the spins $S_{RE}$. Thus, the spins $S_{RE}$ and $S_{TM}$ are arranged in parallel relation to each other. Such a structure may be attained when exchange interaction between the magnetic layers 21 and 22 is greater than a coercive force of the magnetic layers 21 and 22. This effect is theoretically described in "Japanese Journal of Applied Physics", Vol. 20, No. 11, November 1981, pp. 2089-2095. Thus, owing to the interaction between the spontaneous magnetisations $M_1$ and $M_2$ of the magnetic layers 21 and 22, it is possible entirely or nearly to prevent a leakage magnetic field from being generated, and accordingly entirely or nearly to prevent a stray field from being generated. Figure 3 shows a magnetic field H against magnetisation M curve of the magnetic layer 20 as measured by a VSM (vibrating sample magnetometer), wherein a residual magnetisation is zero or nearly zero. That is, no leakage magnetic field or stray field is generated from the magnetic layer 20 as mentioned above, under the condition that no external magnetic field is applied. In the temperature range from an operational temperature (generally, room temperature) of the magnetic layer 20 to a Curie temperature, a magnetic field H against optical detection strength I curve (in the form of a Kerr rotation angle curve or a Kerr hysteresis loop) in one magnetic layer, for example in the second magnetic layer 22, is an abnormal Kerr loop as shown in Figure 4, wherein a magnetic field is inverted in the same direction, while the Kerr hysteresis loop of the other magnetic layer, for example the first magnetic layer 21, is a normal Kerr loop as shown in Figure 5. Thus, owing to the interaction between the magnetic layers 21 and 22, the magnetic layer 20 produces a magnetisation curve with no or almost no residual magnetisation, as shown in Figure 3.

Both of the magnetic layers are arranged not to have a compensation temperature in the temperature range from room temperature to a recording temperature or Curie temperature. Since magnetisations of the rare earth metal elements and the transition metal elements have independent temperature characteristics, the apparent magnetisation of the magnetic layers overall is zero at the compensation temperature, and a coercive force diverges at this temperature. The magnitude of magnetisation by the rare earth metal elements is in a reversed relation with respect to that caused by the transition metal elements with the boundary of the compensation temperature. Therefore, the overall magnetisation of the magnetic layers is inverted with the boundary of the compensation temperature. Thus, by selecting the layers to have no compensation temperature, the magnetisation $M_1$ may be made nearly equal to the magnetisation $M_2$ in the temperature range from room temperature to the Curie temperature, thereby to reduce the stray field as mentioned above. If both the magnetic layers have a compensation temperature in the temperature range from room temperature to the Curie temperature, magnetisation of one of the magnetic layers is inverted with the boundary of the compensation temperature, and accordingly, the stray field cannot be reduced upon recording.

The constitution of the magnetic layer 20 is analysed with a coherent rotation model, and may be determined by the selection of the compositions of the magnetic layers 21 and 22 in association with the saturation magnetisation, the coercive force Hc, the anisotropy constant Ku, the temperature characteristics and the thickness, etc.

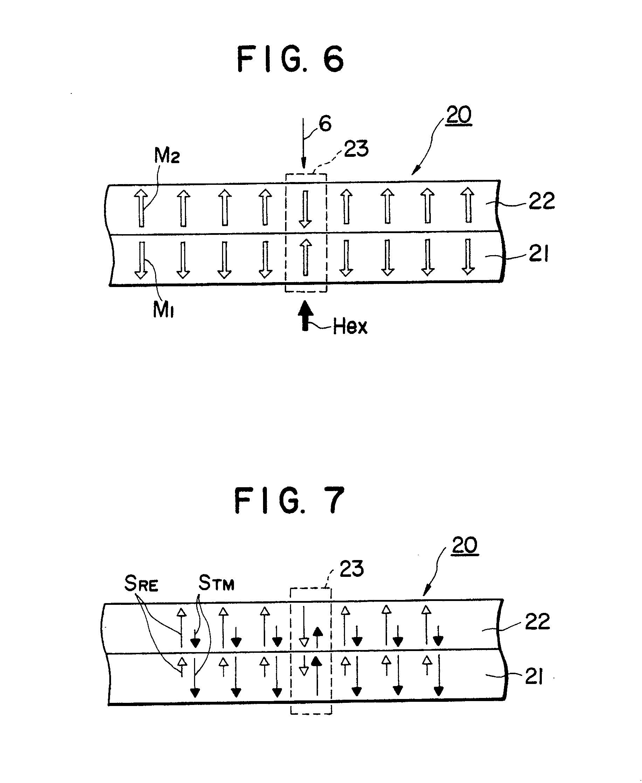

Recording of information on to the magnetic layer 20 is carried out in the following manner. As shown in Figure 6, a laser beam 6 is focused on a recording portion 23 to increase the temperature at the recording portion 23 up to the Curie temperature or the recording temperature. An external magnetic field $H_{ex}$ is then applied to the magnetic layer 20 in the layer thickness direction to invert the magnetisation $M_2$ of, for example, the second magnetic layer 22 in the course of cooling and subsequently to invert the magnetisation $M_1$ of the first magnetic layer 21 exchange coupled with the second magnetic layer 22, thus forming a recording state. Figure 7 shows the orientations of the spins $S_{RE}$ and $S_{TM}$ of the rare earth metal and the transition metal in the magnetic layers 21 and 22 in the recording state.

As described above, the spontaneous magnetisations of the first and second magnetic layers 21 and 22 are directed in opposed relation with each other in the temperature range from room temperature to the Curie temperature, thereby entirely or nearly eliminating the stray field $H_{SF}$. Accordingly, as is apparent from the previous equation (2), the effective magnetic field $H_{effe}$ resulting from the external applied magnetic field $H_{exe}$ upon erasing will be increased thereby to allow the magnetic field $H_{exe}$ to be applied upon erasing to be set at a relatively low magnitude, erasing requiring the larger external magnetic field.

EXAMPLE

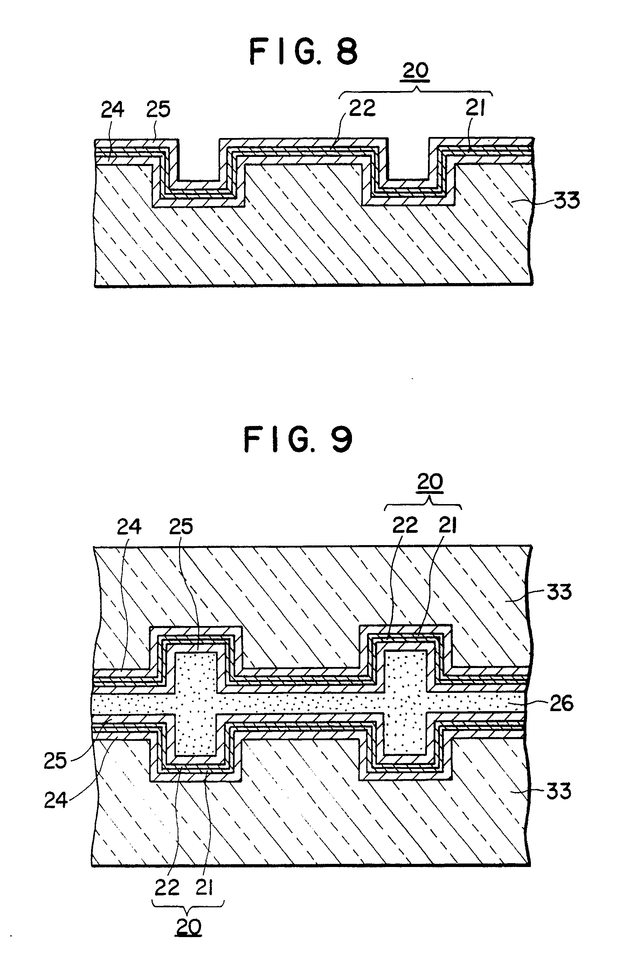

Referring to Figure 8, a transparent substrate 33 such as a glass substrate is prepared with track position detecting grooves formed on one surface. A protective layer 24, for example made of $SiO_x$, $Si_3N_4$ or ZnS, is deposited on the surface of the transparent substrate 33 by sputtering or evaporation. First and second magnetic layers 21 and 22 of amorphous Tb-FeCo are then deposited on the protective layer 24 by sputtering to form a thin perpendicular anisotropy magnetic layer 20. The first magnetic layer 21 has a composition $Tb_{19}$-$(Fe_{95}Co_5)_{81}$ containing a larger amount of Fe than the compensation composition, while the second magnetic layer 22 has a composition $Tb_{25}$-

$(Fe_{95}Co_5)_{75}$ containing a larger amount of Tb than the compensation composition. The first and second magnetic layers 21 and 22 may be continuously deposited with the composition being varied as required by controlling a sputtering current to be applied to Tb and FeCo targets of a sputtering apparatus, so as to prevent a non-magnetic layer such as an oxide layer having such a thickness as to increase the exchange coupling of both the magnetic layers 21 and 22 from being interposed therebetween.

A protective layer 25, for example made of $SiO_x$, $Si_3N_4$ or ZnS, is then deposited on the magnetic layer 20 consisting of the first and second magnetic layers 21 and 22 by sputtering or evaporation. Thus, a magneto-optical recording medium is formed. Alternatively, as shown in Figure 9, a pair of substrates 33, each formed with the magnetic layer 20 as described above, are combined and bonded by an adhesive layer 26. Recording or over-writing to the magnetic layer 20 of the magneto-optical recording medium may be carried out by the aforementioned magnetic field modulating method.

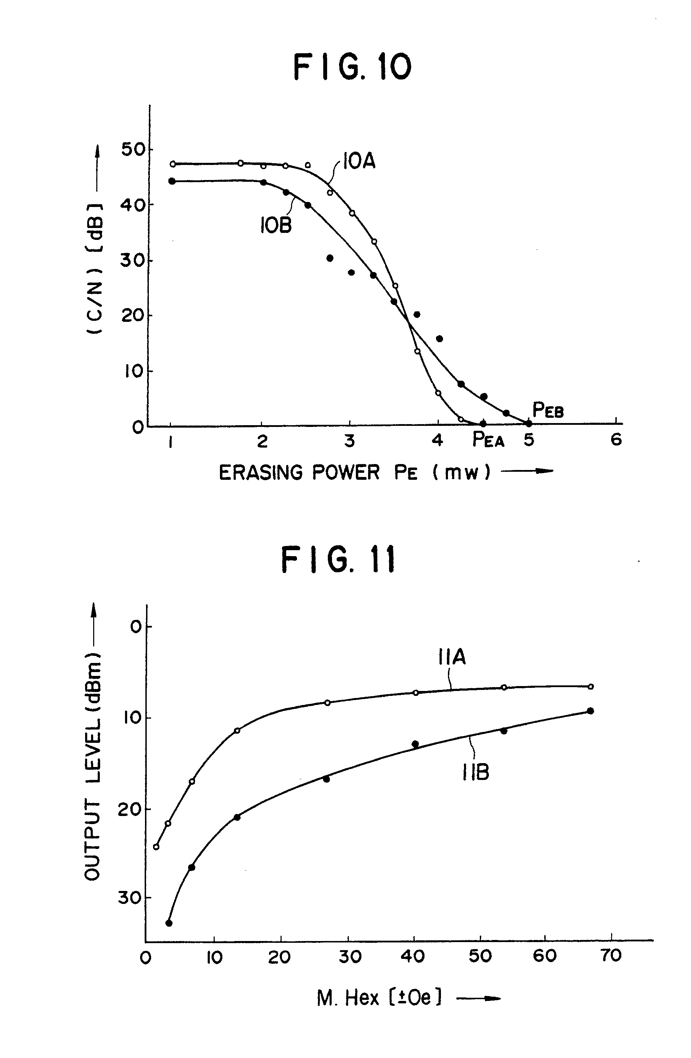

Figure 10 shows the relationship between over-writing power (erasing power) $P_E$ to the magnetic layer and carrier/noise ratio (C/N), that is, the erasing characteristics by over-writing. In this case, a signal was recorded at a moving speed of the recording medium relative to the magneto-optical head of 4.71 m/sec with a frequency of applied magnetic field of 500 kHz, and over-writing of the signal was carried out at a relative moving speed of 6.3 m/sec with a frequency of 500 kHz.

Figure 11 shows the relationship between a modulated external applied magnetic field $M.H_{ex}$ of 500 kHz and a reproduced output. In this case, the running speed of the recording medium was 4.24 m/sec, and the over-writing power $P_E$ was 4.5 mW (direct current). In Figures 10 and 11, curves 10A and 11A show the measurement results by using a magnetic layer of $Tb_{19}(Fe_{95}Co_5)_{81}$ having a thickness of $7 \times 10^{-8}$m (700 Angstroms) as the first magnetic layer 21, and a $Tb_{25}(Fe_{95}Co_5)_{75}$ layer having a thickness of $5 \times 10^{-8}$m (500 Angstroms) as the second magnetic layer 22, respectively, while curves 10B and 11B show the measurement results by using a conventional magnetic single layer of $Tb_{22}(Fe_{95}Co_5)_{78}$. With reference to the curves 10A and 10B, the over-writing power $P_{EA}$ - (the laser power required for completely erasing an original signal by over-writing) according to this embodiment of the invention is 4.50 mW, while the over-writing power $P_{EB}$ of the previously-proposed method is 5.00 mW. Thus, it can be seen that the over-writing power may be reduced in arrangements according to the present invention. Furthermore, as is apparent from the curve 11A in Figure 11, a significant output level, only less by about 3 dB than a maximum output level, is reached by the modulated external magnetic field $M.H_{ex}$ at about $\pm$ 1350 $Am^{-1}$ ($\pm$17 Oe). That is, this embodiment of the present invention enables over-writing with a modulated magnetic field in the order of $10^3$ $Am^{-1}$ (10 Oe).

Although the first and second magnetic layers 21 and 22 are directly superposed in the above preferred embodiment, a non-magnetic layer may be interposed between the magnetic layers 21 and 22 to such an extent that it does not significantly hinder the exchange interaction of the magnetic layers.

Further, although in the above preferred embodiment, the compositions of the first and second magnetic layers 21 and 22 are stepwise changed on the boundary therebetween, the compositions of the magnetic layers may gradually and continuously change in the temperature range excluding the compensation temperature, so that one layer merges with the other as a graded composition.

As a further alternative, the magnetic layer may be formed by a plurality of magnetic layers 21 and 22 alternately superposed on one another.

As described above, a magneto-optical recording medium embodying the present invention may eliminate generation of a stray field by the exchange interaction of the first and second magnetic layers 21 and 22 each excluding a compensation temperature in the temperature range from room temperature to a Curie temperature. The recording medium may be employed for Curie temperature recording thereby to reduce the over-writing power and the erasing power and to improve the responsiveness to the external magnetic field. As a result, over-writing may be carried out by a relatively weak magnetic field, for example in the order of $10^3$ $Am^{-1}$ (10 Oe) or less, with a magnetic modulating system. An electromagnet operable at frequencies in the order of MHz may be realised with a magnetic field $\pm$ 8,000 $Am^{-1}$ ($\pm$100 Oe) or less, and operation at higher frequencies may be realised with a magnetic field in the order of $10^3$ $Am^{-1}$ (10 Oe) or less, for example. Thus it is possible to reduce the magnetic field and such reduction in the magnetic field contributes to a high data transfer rate and a short access time.

Moreover, demagnetising fields due to the exchange interaction between the first and second magnetic layers 21 and 22 are cancelled to eliminate generation of a stray field. At the same time, an apparent coercive force Hc is increased and the saturation magnetisation Ms is large thereby to provide a significant magneto-optical effect. Therefore, the magneto-optical recording medium enables high-density recording with stability and high C/N. Furthermore, since the recording medium is capable of over-writing, initialisation for orienting the magnetisation of the medium in one direction is not necessary, and therefore, a magnetising device as required in the previously-proposed arrangement is not necessary.

Consequently, embodiments of the present invention may provide a magneto-optical recording medium capable of stable high-density recording and easy over-writing using a magnetic field modulating system.

## Claims

1. A magneto-optical recording medium comprising:

   a first ferrimagnetic layer (21) formed of a rare earth metal and a transition metal, having magnetisation ($M_1$) perpendicular to a surface of said first ferrimagnetic layer (21) resulting from excess magnetisation of said rare earth metal compared to said transition metal; and

   a second ferrimagnetic layer (22) formed of a rare earth metal and a transition metal, having magnetisation ($M_2$) perpendicular to a surface of said second ferrimagnetic layer (22) resulting from excess magnetisation of said transition metal;

   said first and second ferrimagnetic layers (21,22) being superposed and coupled by exchange interaction, and said magnetisation ($M_1$) of said first ferrimagnetic layer (21) and said magnetisation ($M_2$) of said second ferrimagnetic layer (22) being arranged in opposite directions;

   characterised in that:

   said first and second ferrimagnetic layers (21,22) do not have compensation temperatures between room temperature and the respective Curie temperature; and

   said magnetisation ($M_1$) of said first ferrimagnetic layer (21) and said magnetisation ($M_2$) of said second ferrimagnetic layer (22) together provide substantially no residual stray magnetic field at a temperature between room temperature and a recording temperature at about the Curie temperature of at least one of said ferrimagnetic layers (21,22).

2. A recording medium according to claim 1, wherein said first and second ferrimagnetic layers (21,22) are formed on a transparent substrate (33).

3. A recording medium according to claim 1 or claim 2, wherein said first and second ferrimagnetic layers (21,22) are formed of the same elements but have different compositions.

4. A recording medium according to claim 3, wherein the transition metal element is Fe, Co or both, and the rare earth metal element is Tb.

5. A recording medium according to claim 4, wherein the first ferrimagnetic layer (21) has a composition $Tb_{19}(Fe_{95}Co_5)_{81}$ and the second ferrimagnetic layer (22) has a composition $Tb_{25}(Fe_{95}Co_5)_{75}$.

## Revendications

1. Support d'enregistrement magnétooptique, comprenant :

une première couche ferrimagnétique (21) formée d'un métal des terres rares et d'un métal de transition, ayant une aimantation $(M_1)$ perpendiculaire à une surface de la première couche ferrimagnétique (21) et résultant de l'aimantation en excès du métal des terres rares par rapport au métal de transition, et

une seconde couche ferrimagnétique (22) formée d'un métal des terres rares et d'un métal de transition, ayant une aimantation $(M_2)$ perpendiculaire à une surface de la seconde couche ferrimagnétique (22) et résultant de l'aimantation en excès du métal de transition,

la première et la seconde couche ferrimagnétique (21, 22) étant superposées et couplées par une interaction d'échange, et l'aimantation $(M_1)$ de la première couche ferrimagnétique (21) et l'aimantation $(M_2)$ de la seconde couche ferrimagnétique (22) ayant des sens opposés, caractérisé en ce que

la première et la seconde couche ferrimagnétique (21, 22) n'ont pas de température de compensation entre la température ambiante et la température respective de Curie, et

l'aimantation $(M_1)$ de la première couche ferrimagnétique (21) et l'aimantation $(M_2)$ de la seconde couche ferrimagnétique (22) ne donnent ensemble pratiquement aucun champ magnétique parasite résiduel à une température comprise entre la température ambiante et une température d'enregistrement qui est au voisinage de la température de Curie de l'une au moins des couches ferrimagnétiques (21, 22).

2. Support d'enregistrement selon la revendication 1, dans lequel la première et la seconde couche ferrimagnétique (21, 22) sont formées sur un substrat transparent (33).

3. Support d'enregistrement selon la revendication 1 ou 2, dans lequel la première et la seconde couche ferrimagnétique (21, 22) sont formées des mêmes éléments mais ont des compositions différentes.

4. Support d'enregistrement selon la revendication 3, dans lequel l'élément du métal de transition est formé de Fe, Co ou des deux, et l'élément du métal des terres rares est Tb.

5. Support d'enregistrement selon la revendication 4, dans lequel la première couche ferrimagnétique (21) a la composition $Tb_{19}(Fe_{95}Co_5)_{81}$, et la seconde couche ferrimagnétique (22) a une composition $Tb_{25}(Fe_{95}Co_5)_{75}$.

## Patentansprüche

1. Magnetooptisches Aufzeichnungsmedium mit

einer aus einem Seltenerdmetall und einem Übergangsmetall bestehenden ersten ferrimagnetischen Schicht (21) mit zu einer ihrer Flächen senkrechter Magnetisierung $(M_1)$, die aus dem Oberschuß der Magnetisierung des Seltenerdmetalls gegenüber der Magnetisierung des Übergangsmetalls resultiert, und

einer aus einem Seltenerdmetall und einem Übergangsmetall bestehenden zweiten ferrimagnetischen Schicht (22) mit zu einer ihrer Flächen senkrechter Magnetisierung $(M_2)$, die aus dem Überschuß der Magnetisierung des Seltenerdmetalls gegenüber der Magnetisierung des Übergangsmetalls resultiert, und

wobei die erste und die zweite ferrimagnetische Schicht (21, 22) übereinander angeordnet und durch Austauschwechselwirkung miteinander gekoppelt sind und wobei die Magnetisierung $(M_1)$ der ersten ferrimagnetischen Schicht (21) und die Magnetisierung $(M_2)$ der zweiten ferrimagnetischen Schicht (22) entgegengesetzte Richtungen haben,

**dadurch gekennzeichnet,**

daß die erste und die zweite ferrimagnetische Schicht (21, 22) zwischen Raumtemperatur und der jeweiligen Curietemperatur nicht temperaturkompensiert sind und

daß die Magnetisierung $(M_1)$ der ersten ferrimagnetischen Schicht (21) und die Magnetisierung $(M_2)$ der zweiten ferrimagnetischen Schicht (22) bei einer zwischen Raumtemperatur und einer etwa bei der Curietemperatur wenigstens einer der ferrimagnetischen Schichten (21, 22) liegenden Aufzeichnungstemperatur zusammen kein magnetisches Reststreufeld liefern.

2. Aufzeichnungsmedium nach Anspruch 1, bei dem die erste und die zweite ferrimagnetische Schicht (21, 22) auf einem transparenten Substrat (33) ausgebildet sind.

3. Aufzeichnungsmedium nach Anspruch 1 oder 2, bei dem die erste und die zweite ferrimagnetische Schicht (21, 22) aus denselben Elementen bestehen, jedoch unterschiedliche Zusammensetzungen haben.

4. Aufzeichnungsmedium nach Anspruch 3, bei dem das Obergangsmetall aus Fe, Co oder beidem besteht und das Seltenerdmetall Tb ist.

5. Aufzeichnungsmedium nach Anspruch 4, bei dem die erste ferrimagnetische Schicht (21) die Zusammensetzung $Tb_{19}(Fe_{95}Co_5)_{81}$ hat und die zweite ferrimagnetische Schicht (22) die Zusammensetzung $Tb_{25}(Fe_{95}Co_5)_{75}$.

# FIG. 1

# FIG. 2

## FIG. 3

## FIG. 4

## FIG. 5

# FIG. 6

# FIG. 7

# FIG. 8

# FIG. 9

# F I G. 10

# F I G. 11

# FIG. 12

# FIG. 13

# FIG. 14

# FIG. 15

# FIG. 16